(19) Europäisches Patentamt
European Patent Office
Office européen des brevets

(11) **EP 4 144 039 B1**

(12) **FASCICULE DE BREVET EUROPEEN**

(45) Date de publication et mention de la délivrance du brevet:
**07.02.2024 Bulletin 2024/06**

(21) Numéro de dépôt: **21725570.2**

(22) Date de dépôt: **15.04.2021**

(51) Classification Internationale des Brevets (IPC):
***H04L 9/08*** *(2006.01)*

(52) Classification Coopérative des Brevets (CPC):
**H04L 9/0852;** H04L 2209/46

(86) Numéro de dépôt international:
**PCT/FR2021/050662**

(87) Numéro de publication internationale:
**WO 2021/219947 (04.11.2021 Gazette 2021/44)**

(54) **PROCÉDÉ DE CALCUL D'UN ET LOGIQUE ENTRE DEUX BITS DE MANIÈRE SÉCURISÉE PAR L'UTILISATION DE LA COMMUNICATION QUANTIQUE**

VERFAHREN ZUR SICHEREN BERECHNUNG EINER LOGISCHEN UND ZWISCHEN ZWEI BITS MIT QUANTENKOMMUNIKATION

METHOD FOR SECURELY COMPUTING A LOGICAL AND BETWEEN TWO BITS USING QUANTUM COMMUNICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2020 FR 2004295**

(43) Date de publication de la demande:
**08.03.2023 Bulletin 2023/10**

(73) Titulaire: **VeriQloud**
**92120 Montrouge (FR)**

(72) Inventeur: **KAPLAN, Marc**
**92120 Montrouge (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**CN-A- 108 388 946     CN-A- 108 632 261**

- **SUDHAKAR REDDY N ET AL: "A Novel hybrid Quantum Protocol to enhance secured dual party Computation over Cloud Networks", 2018 IEEE 8TH INTERNATIONAL ADVANCE COMPUTING CONFERENCE (IACC), IEEE, 14 décembre 2018 (2018-12-14), pages 142-149, XP033538619, DOI: 10.1109/IADCC.2018.8692128**
- **SHI RUN-HUA ET AL: "Quantum solution to a class of two-party private summation problems", ARXIV. ORG, KLUWER ACADEMIC, DORDRECHT, NL, vol. 16, no. 9, 28 juillet 2017 (2017-07-28), pages 1-9, XP036304767, ISSN: 1570-0755, DOI: 10.1007/S11128-017-1676-X [extrait le 2017-07-28]**

## Description

La présente invention concerne de manière générale le domaine du calcul sécurisé utilisant des communications quantiques et plus particulièrement le calcul d'un ET logique entre plusieurs participants connectés à un réseau de communication.

Contexte de l'invention

D'une façon générale, l'invention concerne le domaine du calcul multipartite sécurisé, qui est une branche de la cryptographie dont l'objectif est de permettre à des participants d'obtenir le résultat d'une fonction commune sans qu'aucun d'entre eux ne puisse connaître les entrées des autres participants.

Ce type de problématique semble avoir été évoqué dans les années 1970 dans l'article d'A. Shamir, R. Rivest, and L. Adleman, "Mental Poker", Technical Report LCS/TR-125, Massachusetts Institute of Technology, avril 1979. Dans les années 1980, la problématique fut appliquée au problème théorique des milliardaires qui consister à déterminer la personne la plus riche dans un ensemble de milliardaire sans qu'aucun ne divulgue sa fortune à quiconque. On peut notamment citer l'article d'Andrew C. Yao, *« Protocols for secure computations »* qui présente le problème et un protocole permettant de le résoudre.

R. Sudhakar et al: "A Novel hybrid Quantum Protocol to enhance secured dual party Computation over Cloud Networks"; R. Shi et al: "Quantum solution to a class of two-party private summation problems"; et les demandes de brevet CN 108388946 et CN 108632261 exposent de l'arrière-plan technologique concernant le calcul bipartite voire multipartite sécurisé à l'aide de la cryptographie quantique.

D'autres applications du calcul multipartite sécurisé comprennent les mécanismes d'enchères, ou de votes, les statistiques sur des données médicales, etc. Dans ces applications, d'une façon générale, on veut parvenir à un résultat basé sur l'ensemble des données d'entrées tout en gardant celles-ci privées, c'est-à-dire secrètes vis-à-vis des autres parties. Dans le cas des données médicales, par exemple, il peut être intéressant de construire des données statistiques, ou agrégées, mais pour des raisons légales, les données individuelles ne peuvent pas être accessibles à quiconque. De même, dans les systèmes d'enchère, sur un marché de gros de produits agricoles par exemple, l'enjeu est de déterminer la partie qui a emporté l'enchère mais sans que les différentes parties n'aient à dévoiler leurs offres.

S'il existe des travaux théoriques sur le calcul multipartite sécurisé, fort peu de développements industriels existent. En effet, la protection de la vie privée est une préoccupation relativement neuve : la première implémentation à grande échelle datant de 2009, et les premières solutions pratiques arrivent sur le marché avec, nécessairement, un temps de retard.

En outre, les propositions existantes induisent généralement un surcoût en termes de temps de calcul qui les rendent rédhibitoires pour des utilisations pratiques.

Un autre inconvénient des propositions existantes est leur haut niveau de technicité, lié aux techniques cryptographiques, qui les rendent difficiles à intégrer dans les produits et systèmes existants.

Le but de l'invention est d'au moins améliorer la situation en offrant un procédé efficace et sécurisé de calcul multipartite sécurisé faisant usage d'un canal de communication quantique.

Plus particulièrement, l'invention concerne le sous-problème d'un calcul distribué d'un ET logique, ce calcul permettant la réalisation de toutes fonctions logiques multipartites.

À cette fin, la présente invention propose un procédé pour calculer un ET logique entre deux bits choisis, $x_i$, $x_j$ détenus par un premier et un second participants, $C_i$, Cj respectivement, connectés entre eux et à un serveur par au moins un canal de communication quantique Lq et un canal de communication conventionnel Lc, comportant

une première phase utilisant ledit canal de communication quantique et comprenant

une première étape dans laquelle lesdits premier et second participants déterminent aléatoirement, respectivement, une première $\alpha$ et seconde $\beta$ variable de corrélation ; déterminent chacun un bit aléatoire, respectivement p et q, et transmettent audit serveur, une valeur dépendante dudit bit aléatoire respectif p, q ;

une deuxième étape dans laquelle ledit serveur prépare un photon dans un premier état dans une base orthonormée, et le transmet audit premier participant ;

une troisième étape dans laquelle ledit premier participant applique une première transformation $V^{\alpha}U^p$ audit photon, et le transmet audit second participant, la porte logique V transformant un état dans un état orthogonal et la porte logique U étant une racine carrée de la porte logique V ;

une quatrième étape dans laquelle ledit second participant applique une seconde transformation $V^{\beta}U^q$ audit

photon, et le transmet audit serveur ;

une cinquième étape dans laquelle le serveur effectue une troisième transformation $(U^*)^{p+q}$, mesure l'état dudit photon et détermine une troisième variable de corrélation $\gamma$ en fonction dudit état, de sorte à former une corrélation entre lesdites variables de corrélation ; et,

une seconde phase comportant

une sixième étape dans laquelle lesdits premier et second participants s'échangent une valeur u1, u2 dépendant de la somme entre le bit aléatoire, p, q, et le bit choisi, $x_i$, $x_j$, qu'ils détiennent, respectivement ;

une septième étape dans laquelle ledit premier participant calcule et fournit une première valeur a = $\alpha$ + $x_i \wedge$ u2, ledit second participant calcule et fournit une seconde valeur b = $\beta$ + $x_j \wedge$ u1 + u1$\wedge$u2 et ledit serveur fournit la troisième variable de corrélation $\gamma$,

de sorte que l'on puisse obtenir le résultat du calcul du « ET » logique entre lesdits bits choisi en sommant lesdites première et seconde valeur et ladite troisième variable de corrélation.

Suivant des modes de réalisation préférés, l'invention comprend une ou plusieurs des caractéristiques suivantes qui peuvent être utilisées séparément ou en combinaison partielle entre elles ou en combinaison totale entre elles :

- ladite première phase est effectuée avant que lesdits bits choisis ne soient connus desdits participants

- lors de ladite première étape, lesdits premier et second participant transmettent des valeurs respectives t1=p+r et t2=q+r, où r est un bit partagé secrètement par lesdits premier et second participants ;

- ledit premier état est l'état |+>

- ledit canal de communication conventionnel (Lc) est un canal sécurisé

Un autre aspect de l'invention est relatif à un dispositif pour calculer un ET logique entre deux bits choisis, $x_i$, $x_j$ détenus par un premier et un second participants, $C_i$, Cj respectivement, connectés entre eux et à un serveur, par au moins un canal de communication quantique et un canal de communication conventionnel, comportant des moyens pour mettre en oeuvre le procédé précédemment décrit.

Suivant des modes de réalisation préférés, l'invention comprend une ou plusieurs des caractéristiques suivantes qui peuvent être utilisées séparément ou en combinaison partielle entre elles ou en combinaison totale entre elles :

- lesdits premier et second participants appartiennent à une chaîne de participants, dans laquelle les deux participants aux extrémités respectivement mettent en oeuvre ledit serveur, un participant amont étant apte à émettre un photon, et un participant aval étant apte à recevoir un photon et à mesurer son état.

- lesdits premier et second participants appartiennent à un anneau de participants, de sorte qu'un participant donné mette en oeuvre ledit serveur et soit apte à émettre un photon, à recevoir un photon et à mesurer son état.

- ledit serveur comporte un laser apte à générer des photons et un modulateur initial apte à moduler un degré de liberté d'un photon généré par ledit laser.

- lesdits premier et second participants comportent des modulateurs aptes à moduler un champ électromagnétique dans lequel passent les photons afin de modifier un degré de liberté de ceux-ci

L'utilisation de la communication quantique permet un excellent niveau de sécurité pour un surcoût en temps de calcul modeste. La sécurité est perpétuelle car ne repose pas sur la résolution de problème de calcul. Ainsi, il n'est pas possible d'enregistrer la communication pour briser le protocole plus tard, dans le futur. Le surcoût en temps de calcul pour un ET est peu important : quelques échanges de qubits.

Description des figures

Les figures 1a et 1b illustrent deux variantes d'un exemple d'architecture d'un dispositif pour le calcul multipartite sécurisé selon un mode de réalisation de l'invention.

La figure 2 illustre sous forme de tableau plusieurs exemples de degrés de liberté pour l'encodage de bits quantiques.

La figure 3 illustre un mode de réalisation du procédé, ou protocole, permettant le calcul sécurisé multipartite du « ET » logique dans lequel les étapes principales sont représentées.

Description de mises en oeuvre de l'invention

Comme il a été vu en introduction, un des buts de l'invention est de permettre d'effectuer du calcul multipartite sécurisé entre un ensemble de participants.

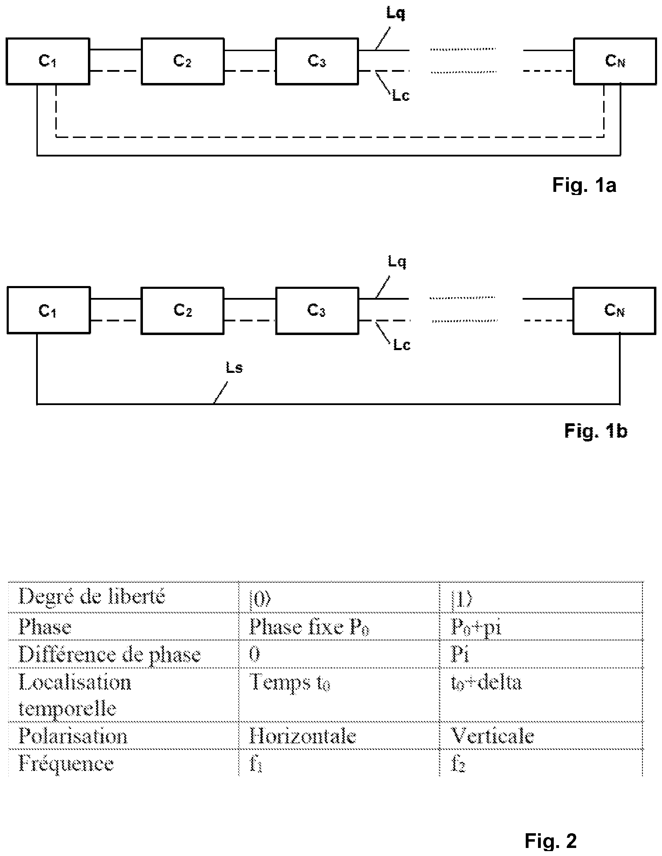

Selon un mode de réalisation, ces participants peuvent être organisés selon une chaîne tel qu'illustré en figure 1b ou selon un anneau, tel qu'illustré en figure 1a.

Les N participants $C_1$, $C_2$, $C_3$...$C_N$ peuvent communiquer avec leurs voisins immédiats uniquement et par au moins deux canaux de communication : un canal de communication quantique Lq et un canal de communication classique, ou conventionnel, $L_c$.

Ce canal de communication classique Lc peut être sécurisé. La sécurisation peut être réalisée par exemple grâce au canal de communication quantique qui permet l'échange de clé de chiffrement avec sécurité inconditionnelle. Il peut être de différentes natures, selon les modes de réalisation. Typiquement, il peut s'agir d'un canal de communication numérique conforme à la pile protocolaire TCP/IP. Il peut s'agir d'un canal filaire (Ethernet...) ou sans-fil (WiFi, cellulaire...).

Selon un autre mode de réalisation, le canal de communication classique Le peut être de type « diffusion », ou *broadcast* selon la terminologie anglaise commune. Ainsi, tous les participants reçoivent les données de tous les participants. Toutefois, la sécurisation par échange de clés de chiffrement peut se faire de pair à pair, de sorte que le canal de communication classique Le « physique » supporte un ensemble de canaux de communication « logique » pair-à-pair, connectant chacun des participants à ses voisins.

En pratique, les participants peuvent être de types variés : il peut s'agir d'ordinateurs connectés à un réseau de communication, ou de machines virtuelles déployées sur un serveur ou sur une ferme de serveurs, etc.

Le canal de communication quantique Lq peut être mis en oeuvre de différentes façons également.

Selon un mode de réalisation, le canal de communication quantique Lq est prévu pour permettre la transmission de signaux lumineux permettant le transport de bits quantiques, généralement appelés « qubits ». Il s'agit typiquement d'une fibre optique.

Les bits quantiques peuvent être codés avec des photons selon un degré de liberté de ceux-ci. Par degré de liberté de photon, on entend une propriété physique décrite par la mécanique quantique et utilisable pour des communications quantiques. Des exemples de degrés de liberté des photons sont la phase, la différence de phase, la fréquence, la polarisation ou encore la localisation temporelle. Dans cette description, on utilise le formalisme qui représente un état quantique sous la forme d'un vecteur $|\alpha>$ dans un espace vectoriel hilbertien de dimension d. Le concept d'espace vectoriel hilbertien étend les méthodes de l'algèbre linéaire en généralisant les notions d'espace euclidien (comme le plan euclidien ou l'espace usuel de dimension 3) et d'espace hermitien à des espaces de dimension quelconque (finie ou infinie). Un vecteur $|\alpha>$ d'un espace vectoriel hilbertien de dimension d peut être décrit par l'intermédiaire d'une base de l'espace vectoriel hilbertien de dimension d.

La figure 2 donne des exemples de degrés de liberté de photon, dans un espace vectoriel hilbertien de dimension 2.

Un premier participant $C_1$ est prévu pour émettre les photons, qui vont être transmis de proche en proche le long de la chaîne.

Selon un mode de réalisation en chaîne, tel qu'illustré par la figure 1b, cette transmission est effectuée jusqu'au participant $C_N$ le plus en aval de la chaîne qui peut être prévu pour effectuer des mesures des états des photons et ainsi lire les états des qubits associés. Ce participant $C_N$ est prévu pour communiquer avec le participant $C_1$ par un canal de communication sécurisé $L_s$.

Selon un mode de réalisation en anneau, tel qu'illustré par la figure 1a, la transmission est effectuée jusqu'au premier participant $C_1$. Comme on le verra, ce premier participant joue donc les rôles d'émetteur et récepteur.

Le premier participant $C_1$ peut être appelé « émetteur ». De façon pratique, il peut être mis en oeuvre de différentes façons. Par exemple, il peut comporter un laser apte à générer des photons et un modulateur initial apte à moduler un degré de liberté d'un photon généré.

Selon un mode de réalisation, on effectue une modulation sur l'intervalle de temps pour lequel on veut générer un photon, dont l'énergie globale correspond à un quantum d'énergie du photon.

Selon un autre mode de réalisation, on utilise la différence de phase comme degré de liberté pour encoder les qubits. Aussi, l'émetteur $C_1$ génère les photons en effectuant une modulation selon deux pics, chaque dans un demi-intervalle de l'intervalle correspondant au photon que l'on souhaite générer. L'énergie globale de cette modulation étant, par configuration, égale au quantum d'énergie d'un photon, chaque photon ainsi généré est une superposition d'un photon entre ces deux demi-intervalles.

Le laser peut être prévu avec une longueur d'onde de 1550 nm qui correspond à l'atténuation minimale dans les fibres optiques communément utilisés en télécommunication.

Les N-2 participants en dehors de participants les plus extrêmes $C_1$, $C_N$ sont des modulateurs. Ils ne sont pas prévus pour émettre des photons mais uniquement pour moduler un champ électromagnétique dans lequel passent les photons afin de modifier un degré de liberté de ceux-ci.

Selon un mode de réalisation (figure 1b), le participant $C_N$ le plus en aval de la chaîne peut être appelé récepteur. Selon un autre mode de réalisation (figure 1a), le participant $C_1$ est à la fois émetteur et récepteur.

Le participant récepteur, $C_1$, $C_N$, peut comprendre un détecteur de photons uniques. Différents mécanismes existent dans l'état de la technique. On peut par exemple citer par exemple les détecteurs basés sur des photodiodes à avalanches (APD pour « *Avalanche PhotoDiode* » en anglais).

Il est possible de mettre en place des canaux de communication bidirectionnels, de sorte que les bits quantiques (ou qubits) puissent être émis dans les deux sens de la chaîne. Dans un tel cas, l'émetteur $C_1$ peut également être un récepteur, c'est-à-dire disposer des moyens de mesure (détecteur de photon unique).

En fonction du type de degré de liberté, différents types de modulateurs et de détecteurs peuvent être utilisés par les participants $C_1$, $C_2$, $C_3$... $C_N$.

Lorsque le degré de liberté des photons pour encoder les bits quantiques est la phase, les modulateurs peuvent être des modulateurs de phase. Par exemple, le modèle LN53S-FC ou LN65S-FC commercialisé par la société Thorlabs peut être utilisé.

Lorsque le degré de liberté des photons pour encoder les bits quantiques est la polarisation des photons, les modulateurs peuvent être des modulateurs de polarisation. Par exemple, un modèle de la série de produits PSC-LN séries commercialisé par la société iXblue Photonics peut être utilisé.

Lorsque le degré de liberté des photons pour encoder les bits quantiques est la localisation temporelle des photons, les modulateurs peuvent comprendre chacun un nombre d de lignes à retard et un nombre 2d de lames séparatrices, où d représente la dimension de l'espace vectoriel hilbertien de représentation des états quantiques. La superposition de localisations temporelles à réaliser pour créer une base incompatible peut être obtenue en programmant les lames séparatrices.

Le même principe peut être utilisé pour la détection par le récepteur $C_N$. Celui-ci peut ne disposer que d'un seul détecteur de photon unique, en aval d'un dispositif similaire permettant de séparer les faisceaux et retarder les faisceaux différemment pour qu'après recombinaison des faisceaux, l'instant de la détection du photon permette de déterminer la localisation temporelle de ce photon.

Cette architecture peut être utilisée pour le calcul multipartite sécurisé entre les participants.

Il est connu que tout calcul portant sur des données binaires peut être réduit en combinaison d'opérateurs logiques universels. Ces opérateurs logiques universelles sont « NON ET » (ou « NAND » pour « Not And » en anglais) et « NON OU » (ou NOR » pour « Not Or » en anglais).

La réalisation d'un opérateur « NON » logique ne pose pas de problème particulier de sécurisation puisqu'il s'agit d'un opérateur local. Par contre, les opérateurs logiques ET et OU peuvent impliquer plusieurs participants et impliquent donc un problème de sécurité pour permettre d'obtenir le résultat de l'opération sans qu'aucun des participants n'ait connaissance de la valeur détenue par les autres participants.

Il est plus commun d'utiliser l'opérateur « NON ET ». Aussi, l'invention porte sur le sous-problème particulier du calcul d'un ET logique entre plusieurs participants. Plus spécifiquement, elle porte sur le calcul d'un ET logique entre deux participants, étant entendu que le passage à plus de deux participants revient à combiner plusieurs opérateurs « ET ».

Dans la suite on notera $x_i \wedge x_j$ l'opération du « et » logique entre les bits $x_i$ et $x_j$.

L'invention vise donc à calculer un ET logique entre des bits $x_i$ et $x_j$ détenus par deux participants, respectivement $C_i$ et $C_j$ avec 1<i<N et 1<j<N et, bien sûr, i≠j, avec pour contraintes que

- Le participant $C_i$ ne doit pas pouvoir apprendre davantage d'information que les valeurs du bit $x_i$ et de $x_i \wedge x_j$ (*a fortiori,* il ne doit pas pouvoir connaître la valeur du bit $x_j$),

- le participant $C_j$ ne doit pas pouvoir apprendre davantage d'information que les valeurs du bit $x_j$ et de $x_i \wedge x_j$ (*a fortiori,* il ne doit pas pouvoir connaître la valeur du bit $x_i$), et

- aucune autre partie au calcul ne doit pouvoir connaître ni $x_i$ ni $x_j$.

On appellera ces deux bits $x_i$ et $x_j$, « bits choisis ».

Notamment, le procédé selon l'invention fait intervenir un tiers-partie, appelé serveur dans la suite. Ce serveur peut connaître le résultat final $x_i \wedge x_j$ mais ne doit pas connaître ni la valeur de $x_i$ ni la valeur de $x_j$. Ce serveur a aussi pour fonction de créer et émettre un photon dans un état donné, et peut donc être mise en oeuvre, au moins partiellement, par l'émetteur $C_1$.

Selon un premier mode de réalisation basé sur une architecture en anneau (figure 1a), le participant $C_1$ est également récepteur, de sorte que le serveur dispose directement de toutes les informations en tant qu'émetteur et récepteur.

Selon un second mode de réalisation basé sur une architecture en chaîne (figure 1b), le serveur peut disposer des informations reçues par le récepteur $C_N$ via un canal de communication sécurisé Ls. En quelque sorte, le serveur est alors mis en oeuvre par le couple $C_1/C_N$ formé par les deux participants situés aux extrémités de la chaîne de participants.

D'autres mises en oeuvre sont encore envisageables. Dans la suite, par simplicité, on attribuera la référence $C_1$ au serveur.

D'une façon très générale, ce calcul repose sur corrélation, dite « magique », entre trois variables binaires $\alpha$, $\beta$ $\gamma$ déterminées chacune, respectivement, par les deux participants $C_i$, $C_j$ et le serveur $C_1$ et correspondant à un « et » logique entre deux bits $b_1$, $b_2$ détenus par les participants de sorte que $\alpha + \beta + \gamma = b_1 \wedge b_2$ En outre, les distribution marginales des trois variables $\alpha$, $\beta$ $\gamma$ doivent répondre au critère d'uniformité : lorsqu'on le regarde individuellement, chaque bit peut prendre pour valeur 0 ou 1 de façon équiprobable. Dans la suite, on appellera ces trois variables, « variables de corrélation »

Une première phase consiste à établir une corrélation magique correspondant au « et » logique entre deux bits aléatoires et en utilisant le canal de communication quantique $L_q$ et le calcul quantique. A l'issue de cette première phase, on détermine donc les trois variables $\alpha$, $\beta$ $\gamma$ formant la corrélation magique.

Une seconde phase consiste à utiliser cette corrélation magique ($\alpha$, $\beta$ $\gamma$) pour calculer le « et » logique entre les deux bits choisis $x_i$, $x_j$, c'est-à-dire le résultat final recherché, en utilisant un canal de communication classique sécurisé, Le.

Dans la première phase, les participants $C_i$ et $C_j$ vont appliquer des portes quantiques, U et V, à des qubits d'entrées pour générer des qubits de sortie.

La porte quantique V transforme l'état (ou qubit) d'un photon en un état orthogonal, dans une base orthonormée quelconque. La porte quantique U correspond à une racine carrée de la transformation effectuée par la porte quantique V.

Sur la sphère de Bloch, ces opérations reviennent donc à dire toute la partie quantique est définie à une rotation près.

Le qubit est généré par le serveur $C_1$, dans un premier état, dans une base orthonormée.

Selon un mode de réalisation, ce premier état est noté |+>. Cette notation est toutefois arbitraire, dans la mesure où il suffit, selon l'invention, de disposer de deux états orthogonaux quelconque, mais permet la clarté de l'exposé.

On notera dans la suite |0> et |1> deux états orthogonaux (c'est-à-dire parfaitement distinguables) parmi les degrés de liberté quantiques du photon émis dans cette base orthonormée.

On note |+> et |-> deux états formés par la superposition de ces deux qubits orthogonaux. On peut écrire :

$$|+> = \frac{1}{\sqrt{2}}(|0> + |1>)$$

On peut également écrire

$$|-> = \frac{1}{\sqrt{2}}(|0> - |1>)$$

La porte V est une porte de Pauli-Z qui équivaut à une rotation autour de l'axe Z de la sphère de Bloch par $\pi$ radians. Elle peut être représentée par la matrice Pauli-Z :

$$Z = \begin{bmatrix} 1 & 0 \\ 0 & -1 \end{bmatrix}$$

Autrement dit, une telle porte V transforme l'état |+> en l'état |->, et, réciproquement l'état |-> en l'état |+>

Comme dit précédemment, la porte U est une racine carrée de la porte V. Selon un mode de réalisation, il peut s'agir d'une rotation autour de l'axe Z de la sphère de Bloch par $\pi/2$ radians. Autrement dit, en appliquant deux fois la porte U, on obtient l'équivalent d'une porte V.

Dans un mode de réalisation consistant à encoder l'information sur la différence de phases, le qubit |+> peut correspondre à un photon en superposition uniforme sur ces deux demi-intervalles. Dans ce cas, les rotations U et V correspondent à un déphasage du 2e demi-intervalle de $\pi$ et $\pi/2$, respectivement.

Dans tous les cas décrits plus haut et d'une façon générale, les implémentations sont réalisées en appliquant une modulation adéquate.

On peut également citer l'article de Marco Clementi, Anna Pappa, Andreas Eckstein, Ian Walmsley, Elham Kashefi, et al., « Classical multiparty computation using quantum resources" in Physical Review A, American Physical Society, 2017, 96 (6), pp.062317. (10.1103/PhysRevA.96.062317). (hal-02164423). Dans cet article, les états |+> et |-> sont implémentés en utilisant des polarisations verticales et horizontales. Les rotations U et V sont implémentées avec des lames à demi-retard ou « *half-wave plates* » en anglais.

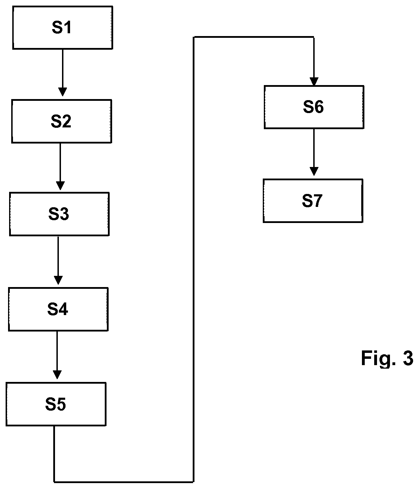

La figure 3 illustre un mode de réalisation du procédé, ou protocole, permettant le calcul sécurisé multipartite du « ET » logique dans lequel les étapes principales sont représentées. La figure 3 est un organigramme purement illustratif et l'enchainement des étapes peut se comprendre sans le recours à cet organigramme, de même que d'autres enchainements, ou d'autres divisions en étapes, sont possibles et accessibles à l'homme du métier.

Dans cet exemple, on suppose que deux participants $C_i$ et $C_j$ disposent, à un moment donné, de deux bits, respectivement $x_i$ et $x_j$ dont on souhaite calculer le « et » logique.

Dans une étape S1, chaque participant $C_i$, $C_j$ détermine, par exemple de façon aléatoire, une valeur pour sa variable de corrélation respective $\alpha$, $\beta$ destiné à former une corrélation magique. Chaque participant détermine également la valeur de deux autres bits, respectivement p et q, également de façon aléatoire. Ces 4 bits aléatoires $\alpha$, $\beta$, p, q peuvent être déterminés dans cette préliminaire S1 ou bien plus tard, avant que ces bits ne soient nécessaires dans les calculs exigées par les étapes subséquentes du protocole.

Dans une étape S2, le serveur $C_1$ prépare et envoie un photon dans un état de superposition d'états orthogonaux dans une base orthonormée donnée.

Selon un mode de réalisation, le serveur $C_1$ prépare et émet un état |+> qui est une superposition uniforme de deux états |0> et |1>, au premier participant $C_i$. Selon un autre mode de réalisation, le serveur $C_1$ prépare et émet un état |->. Comme dit plus haut, l'état initial est en soi indifférent, il est uniquement important que la transformation V transforme cet état en un état orthogonal.

Il est à noter que les deux participants sont interchangeables, puisque le « et » logique est une opération commutative. Aussi les termes de « premier » et « second » participants permettent uniquement de les distinguer, pour la clarté de la description, sans établir d'ordre ou de hiérarchie entre eux.

Dans une étape S3, le premier participant Ci reçoit cet état du photon et y applique une première transformation quantique formée de la succession de portes quantiques effectuant l'une une rotation d'angle $\pi$ autour de l'axe Z et l'autre une rotation d'angle $\pi/2$ autour de l'axe Z, cette transformation dépendant des deux bits aléatoires déterminés par ce premier participants, c'est-à-dire $\alpha$ et p.

Plus précisément, cette première transformation peut s'écrire $V^\alpha U^p$.

Cette notation $T^e$ signifie que si l'exposant e est égal à 1, on applique la transformation T et s'il est égal à 0, on ne l'applique pas.

Le premier participant $C_i$ peut alors envoyer le qubit résultat de cette transformation dans le canal de communication quantique $L_q$ à destination du second participant $C_j$.

Dans une étape S4, le second participant $C_j$ effectue une transformation similaire mais basée sur les deux bits aléatoires dont il dispose : $\beta$ et q. Cette seconde transformation peut s'écrire $V^\beta U^q$ Le qubit résultat de cette transformation peut alors être envoyé dans le canal de communication quantique $L_q$ à destination du serveur $C_1$.

Dans une étape S5, le serveur $C_1$ effectue une troisième transformation qui peut s'écrire $(U^*)^{p+q}$, où $U^*$ est la transformation inverse de U.

Selon l'invention, la valeur p+q est transmise au serveur $C_1$, sans communiquer les valeurs individuelles de p et de q.

Selon un mode préférentiel de réalisation de l'invention, on sécurise le protocole en partageant secrètement un bit r entre les deux participants $C_i$ et $C_j$ afin d'encoder la communication des bits p et q vers le serveur $C_1$ Aussi, lors de l'étape S1 (qui peut se prolonger jusqu'à cette étape S4),

- le participant $C_i$ envoie au serveur $C_1$ le bit t1=p+r sur un canal sécurisé ;

- le participant $C_j$ envoie au serveur $C_1$ le bit t2=q+r sur un canal sécurisé.

D'autres méthodes sécurisées peuvent permettre de transmettre la valeur de t1+t2 au serveur $C_1$, comme il sera vu plus loin.

Le signe « + » désigne l'addition binaire. Dans la mesure où l'on ne s'intéresse qu'à un unique bit, cette opération équivaut à un « ou exclusif »

Le serveur $C_1$ peut alors calculer la troisième transformation $(U^*)^{t1+t2}$.

Après cette transformation, l'état du qubit vaut : $(U^*)^{t1+t2}.V^\beta U^q V^\alpha U^p |+>$

Cette expression peut se simplifier, en fonction des différentes valeurs que peuvent prendre les bits aléatoires p et q (du fait de la commutativité des ports U, V et U') en:

- $V^\beta V^\alpha |+>$ si p=0 et q=0

- $V^\beta V^\alpha |+>$ si p=0 et q=1

- $V^\beta V^\alpha |+>$ si p=1 et q=0

- $V^\beta V^\alpha |->$ si p=1 et q=1

On peut ici rappeler que la porte V revient à intervertir les états |+> et |->, de sorte que le nombre d'interversions dépend de la valeur des valeurs de corrélations $\alpha$ et $\beta$.

On peut donc écrire la table de vérité suivante :

| $\alpha$ | $\beta$ | $V^\beta V^\alpha$ |+> | $\alpha + \beta$ |
|---|---|---|---|
| 0 | 0 | \|+> | 0 |
| 0 | 1 | \|-> | 1 |
| 1 | 0 | \|-> | 1 |
| 1 | 1 | \|+> | 0 |

Le serveur $C_1$ mesure alors le qubit reçu dans la base {|+>, |->}, et détermine la valeur de sa variable de corrélation $\gamma$ de la façon suivante :

- si la mesure vaut |+>, alors y=0
- si la mesure vaut |->, alors y=1

Dès lors, on peut remarquer que $\gamma = \alpha + \beta + (p \wedge q)$.
Autrement dit, $\alpha + \beta + \gamma = p \wedge q$

Cette expression est celle d'une corrélation magique entre les trois variables de corrélation $\alpha$, $\beta$, $\gamma$, dont la somme binaire permet de calculer le « et » logique des deux bits p et q.

Cette corrélation une fois établie, elle permet de calculer, dans une seconde phase, le « et » logique pour d'autres bits, et notamment les bits choisis $x_i$, $x_j$

On peut remarquer que cette première phase est indépendante des bits choisis $x_i$, $x_j$.

Selon un mode de réalisation, les premières étapes S1, S2, S3, S4, S5 constituant une première phase, peuvent être effectués en amont du moment où les participants $C_i$ et $C_j$ disposent des bits respectifs $x_i$, $x_j$ dont on souhaite calculer le « et » logique. Autrement dit, cette première phase peut faire l'objet d'un précalcul, de sorte à alléger les calculs à effectuer entre le moment où les bits $x_i$ et $x_j$ sont connus et la mise à disposition du résultat, $x_i \wedge x_j$.

Ce mode de réalisation permet des gains de performance et de sécurité conséquents.

Dans une étape S6, les participants $C_i$, $C_j$ s'échange une valeur dépendant de la somme entre le bit aléatoire, respectivement p, q, et le bit choisi, respectivement $x_i$, $x_j$.

Par exemple,

- le premier participant $C_i$ calcule u1= p + $x_i$ et l'envoie au second participant $C_j$.

- le second participant Cj calcule u2= q + $x_j$ et l'envoie au premier participant $C_i$.

Dans une étape S7, les deux participants Ci, $C_j$ et le serveur $C_1$ fournissent chacun séparément une valeur, respectivement a, b, c, de sorte que a+b+c = $x_i \wedge x_j$.

Plus précisément,

- le premier participant calcule et fournit a = $\alpha + x_i \wedge$ u2

- le second participant calcule et fournit b = β + $x_j \wedge u1 + u1 \wedge u2$

- le serveur fournit c = γ

Les valeurs de u1 et u2 sont aléatoires et sont partagées préalablement entre les participants. Ce partage peut être effectué par le canal de communication classique Le sécurisé.

On peut alors vérifier que a+b+c = $x_i \wedge x_j$, soit le résultat recherché.

En effet,

$$a+b+c = \alpha + x_i \wedge u2 + \beta + x_j \wedge u1 + u1 \wedge u2 + \gamma$$

$$= \alpha + x_i \wedge (q+x_j) + \beta + x_j \wedge (p+x_i) + (p+x_i) \wedge (q+x_j) + \gamma$$

$$= \alpha + \beta + \gamma + x_i \wedge q + x_i \wedge x_j + x_j \wedge p + x_j \wedge x_i + p \wedge q + p \wedge x_j + x_j \wedge q + x_i \wedge x_j$$

$$= p \wedge q + x_i \wedge q + x_i \wedge x_j + x_j \wedge p + x_j \wedge x_i + p \wedge q + p \wedge x_j + x_j \wedge q + x_i \wedge x_j$$

Les termes identiques s'annulent deux à deux puisqu'il s'agit d'additions binaires sur un unique bit (sans retenu), donc équivalentes à un « ou » exclusif. Dès lors, cette expression peut se simplifier, effectivement, en a+b+c = $x_i \wedge x_j$

On peut ainsi donc obtenir, par cette simple somme binaire de termes indépendants, la valeur du « et » logique entre les bits $x_i$ et $x_j$ choisis respectivement par le premier participant Ci, et le second participant $C_j$ sans que leur valeur ne soit connue par une autre entité que celui qui l'a choisi. Ainsi, donc, on assure bien la propriété recherché de calcul multipartite sécurisé.

En outre, dans le cas où la première phase (quantique) est effectuée en avance, la phase de calcul effectif de ce « et logique » (seconde phase) est très efficace puisque ne comporte qu'un double échange entre les deux participants (étape S6), des additions de bit et la mise à disposition des valeurs a, b, c qu'il suffit de sommer pour obtenir le résultat.

Selon un mode de réalisation de l'invention, la sécurité du procédé peut être renforcée de différentes manières.

Le canal de communication conventionnel Le peut notamment être sécurisé selon des moyens conventionnels ou quantiques.

Ainsi que précédemment décrit, un bit r peut être partagé secrètement entre les participants et le serveur. Ce bit peut être partagé en utilisant une distribution de clé quantique, par exemple.

Les mécanismes de sécurisation par clés quantiques sont connus en soi, et il existe différents dispositifs commerciaux pour réaliser cette étape. On peut notamment citer les dispositifs les dispositifs « Cerberis3 QKD System » commercialisé par la société ID Quantique, « QKD system » commercialisé par la société Toshiba, ou « Quantum Key Distribution (QKD) » de la société Quintessence Labs.

On peut également citer la demande de brevet FR1909839 intitulée « Procédé de transmission sécurisée de séquences d'états quantiques entre plusieurs participants en ligne sur un canal de communication quantique ».

Egalement, un bit différent, r1, r2, r3 peut être partagé entre chaque couple de l'ensemble constitué par les participants et le serveur. Ainsi, le premier participant $C_i$ et le serveur $C_1$ s'échangent un premier bit r1 ; le second participant $C_j$ et le serveur $C_1$ s'échangent un deuxième bit r2, et les premier et second participant s'échangent un troisième bit r3.

Lors de la phase d'initialisation S1, on peut alors avoir :

- Le premier participant $C_i$ envoie au serveur $C_1$ la valeur t1'=p+r1+r3

- Le second participant $C_j$ envoie au serveur $C_1$ la valeur t2'=q+r2+r3

- Le serveur $C_1$ peut alors former les valeurs t1=t1'+r1 et t2=t2'+r2

Le calcul d'un « et » logique binaire peut être appliqué pour résoudre quel problème de calcul distribué entre les deux participants $C_i$, $C_j$.

Dans le cas d'une application à un mécanisme d'enchères, on suppose que chacun des participants Ci, Cj détient deux nombres, respectivement $x_i$, $x_j$, de n bits chacun et représentant une valeur d'enchère : $x_{j,j} \in \{0,1\}^n$

Pour deux entrées binaires a, b, on définit la fonction f(a,b)=1+a$\wedge$(1+b). Cette fonction prend pour valeur 1 si b≥a, et 0 sinon.

Cette fonction peut se calculer, pour un bit, selon le procédé précédemment décrit. En effet, en remarquant que 1+b revient à un NON logique, cette fonction se calcule donc comme f(a,b)=NON(a et (NON b))

On peut alors déterminer le vainqueur entre deux offres de l'enchère en effectuant la comparaison des bits des deux valeurs $x_i$, $x_j$ bit par bit en partant du bit de poids le plus fort, et en utilisant cette fonction f de comparaison pour chaque bit.

Si f renvoie 0 pour un bit, alors $x_i > x_j$ et $C_i$ emporte l'enchère sur $C_j$ ; sinon $x_j \geq x_i$ et l'enchère est soit emportée par $C_j$ soit les deux participants ont fait la même offre.

En faisant ce calcul dans les deux sens, c'est-à-dire également en intervertissant $x_i$ et $x_j$ pour le second calcul, on peut déterminer, dans toutes les situations, lequel des participants a emporté l'enchère.

## Revendications

1. Procédé pour calculer un ET logique entre deux bits choisis, $x_i$, $x_j$ détenus par un premier et un second participants, Ci, Cj respectivement, connectés entre eux et à un serveur ($C_1$), par au moins un canal de communication quantique (Lq) et un canal de communication conventionnel (Lc), comportant

    une première phase utilisant ledit canal de communication quantique et comprenant

        une première étape (S1) dans laquelle lesdits premier et second participants déterminent aléatoirement, respectivement, une première $\alpha$ et seconde $\beta$ variable de corrélation ; déterminent chacun un bit aléatoire, respectivement p et q, et transmettent audit serveur ($C_1$), une valeur dépendante dudit bit aléatoire respectif p, q ;
        une deuxième étape (S2) dans laquelle ledit serveur ($C_1$) prépare un photon dans un premier état dans une base orthonormée, et le transmet audit premier participant (Ci) ;
        une troisième étape (S3) dans laquelle ledit premier participant ($C_i$) applique une première transformation $V^\alpha U^p$ audit photon, et le transmet audit second participant ($C_j$), la porte logique V transformant un état dans un état orthogonal et la porte logique U étant une racine carrée de la porte logique V ;
        une quatrième étape (S4) dans laquelle ledit second participant ($C_j$) applique une seconde transformation $V^\beta U^q$ audit photon, et le transmet audit serveur ;
        une cinquième étape (S5) dans laquelle le serveur $C_1$ effectue une troisième transformation $(U^*)^{p+q}$, mesure l'état dudit photon et détermine une troisième variable de corrélation $\gamma$ en fonction dudit état, de sorte à former une corrélation entre lesdites variables de corrélation ; et,

    une seconde phase comportant

        une sixième étape (S6) dans laquelle lesdits premier et second participants s'échangent une valeur u1, u2 dépendant de la somme entre le bit aléatoire, p, q, et le bit choisi, $x_i$, $x_j$. qu'ils détiennent, respectivement ;
        une septième étape (S7) dans laquelle ledit premier participant calcule et fournit une première valeur a = $\alpha + x_i \wedge u2$, ledit second participant calcule et fournit une seconde valeur b = $\beta + x_j \wedge u1 + u1 \wedge u2$ et ledit serveur fournit la troisième variable de corrélation $\gamma$,
        de sorte que l'on puisse obtenir le résultat du calcul du « et » logique entre lesdits bits choisi en sommant lesdites première et seconde valeur et ladite troisième variable de corrélation.

2. Procédé selon la revendication précédente, dans lequel ladite première phase est effectuée avant que lesdits bits choisis ne soient connus desdits participants.

3. Procédé selon l'une des revendications précédentes, dans lequel, lors de ladite première étape (S1), lesdits premier et second participant s transmettent des valeurs respectives t1=p+r et t2=q+r, où r est un bit partagé secrètement par lesdits premier et second participants.

4. Procédé selon l'une des revendications précédentes, dans lequel ledit premier état est l'état $|+\rangle$.

5. Procédé selon l'une des revendications précédentes, dans lequel ledit canal de communication conventionnel (Lc) est un canal sécurisé.

6. Dispositif pour calculer un ET logique entre deux bits choisis, $x_i$, $x_j$ détenus par un premier et un second participants ($C_i$, $C_j$ respectivement), connectés entre eux et à un serveur ($C_1$), par au moins un canal de communication quantique (Lq) et un canal de communication conventionnel (Lc), comportant des moyens pour mettre en oeuvre le procédé selon l'une des revendications précédentes.

7. Dispositif selon la revendication précédente dans lequel lesdits premier et second participants appartiennent à une chaîne de participants, dans laquelle les deux participants aux extrémités ($C_1$, $C_N$ respectivement) mettent en oeuvre ledit serveur, un participant amont étant apte à émettre un photon, et un participant aval ($C_N$) étant apte à recevoir un photon et à mesurer son état.

8. Dispositif selon la revendication 6, dans lequel lesdits premier et second participants appartiennent à un anneau de participants, de sorte qu'un participant donné ($C_1$) mette en oeuvre ledit serveur et soit apte à émettre un photon, à recevoir un photon et à mesurer son état.

9. Dispositif selon l'une des revendications 6 à 8, dans lequel ledit serveur comporte un laser apte à générer des photons et un modulateur initial apte à moduler un degré de liberté d'un photon généré par ledit laser.

10. Dispositif selon l'une des revendications 6 à 8, dans lequel lesdits premier et second participants comportent des modulateurs aptes à moduler un champ électromagnétique dans lequel passent les photons afin de modifier un degré de liberté de ceux-ci.

**Patentansprüche**

1. Verfahren zum Berechnen einer UND-Logik zwischen zwei ausgewählten Bits, $x_i$, $x_j$, die von einem ersten und einem zweiten Teilnehmer $C_i$ bzw. $C_j$ gehalten werden, die untereinander und mit einem Server ($C_1$) verbunden sind, über mindestens einen Quanten-Kommunikationskanal (Lq) und einen herkömmlichen Kommunikationskanal (Lc), umfassend

   eine erste Phase, welche den Quanten-Kommunikationskanal verwendet, aufweisend
   einen ersten Schritt (S1), bei dem der erste und zweite Teilnehmer zufällig eine erste $\alpha$ bzw. zweite $\beta$ Korrelationsvariable bestimmen; die jeweils ein zufälliges Bit p bzw. q bestimmen und an den Server ($C_1$) einen Wert abhängig von dem zufälligen Bit p bzw. q übermitteln;
   einen zweiten Schritt (S2), bei dem der Server ($C_1$) ein Photon in einem ersten Zustand in einer orthonormalen Basis vorbereitet und ihn an den ersten Teilnehmer ($C_i$) übermittelt;
   einen dritten Schritt (S3), bei dem der erste Teilnehmer ($C_i$) eine erste Transformation $V^{\alpha}U^p$ an dem Photon anwendet und diese an den zweiten Teilnehmer ($C_j$) übermittelt, wobei das Logikgatter V einen Zustand in einen orthogonalen Zustand transformiert und das Logikgatter U eine Quadratwurzel des Logikgatters V ist;
   einen vierten Schritt (S4), bei dem der zweite Teilnehmer ($C_j$) eine zweite Transformation $V^{\beta}U^q$ an dem Photon anwendet und diese an den Server übermittelt;
   einen fünften Schritt (S5), bei dem der Server $C_1$ eine dritte Transformation $(U^*)^{p+q}$ durchführt, den Zustand des Photons misst und eine dritte Korrelationsvariable $\gamma$ in Abhängigkeit von dem Zustand bestimmt, sodass eine Korrelation zwischen den Korrelationsvariablen gebildet wird; und
   eine zweite Phase, umfassend
   einen sechsten Schritt (S6), bei dem der erste und zweite Teilnehmer einen Wert u1, u2 abhängig von der Summe zwischen dem zufälligen Bit p, q und dem ausgewählten Bit $x_i$ bzw. $x_j$, welche sie halten, austauschen;
   einen siebten Schritt (S7), bei dem der erste Teilnehmer einen ersten Wert a = $\alpha$ + $x_i \wedge$u2 berechnet und bereitstellt, der zweite Teilnehmer einen zweiten Wert b = $\beta$ + $x_j \wedge$u1 + u1$\wedge$u2 berechnet und bereitstellt und der Server die dritte Korrelationsvariable $\gamma$ bereitstellt,
   sodass man das Ergebnis der Berechnung der "UND"-Logik zwischen den ausgewählten Bits durch Summieren des ersten und zweiten Werts und der dritten Korrelationsvariable erhalten kann.

2. Verfahren nach dem vorstehenden Anspruch, wobei die erste Phase durchgeführt wird, bevor die ausgewählten Bits den Teilnehmern bekannt sind.

3. Verfahren nach einem der vorstehenden Ansprüche, wobei bei dem ersten Schritt (S1) der erste und zweite Teilnehmer die jeweiligen Werte t1=p+r und t2=q+r übermitteln, wobei r ein von dem ersten und zweiten Teilnehmer geheim geteiltes Bit ist.

4. Verfahren nach einem der vorstehenden Ansprüche, wobei der erste Zustand der Zustand |+> ist.

5. Verfahren nach einem der vorstehenden Ansprüche, wobei der herkömmlichen Kommunikationskanal (Lc) ein sicherer Kanal ist.

6. Vorrichtung zum Berechnen einer UND-Logik zwischen zwei ausgewählten Bits, $x_i$, $x_j$, die von einem ersten und einem zweiten Teilnehmer gehalten werden (bzw. $C_i$, $C_j$), die untereinander und mit einem Server ($C_1$) verbunden sind, über mindestens einen Quanten-Kommunikationskanal (Lq) und einen herkömmlichen Kommunikationskanal (Lc), umfassend Mittel zum Ausführen des Verfahrens nach einem der vorstehenden Ansprüche.

7. Vorrichtung nach einem dem vorstehenden Anspruch, wobei der erste und zweite Teilnehmer einer Kette von Teilnehmern zugehörig sind, wobei die zwei Teilnehmer am Ende ($C_1$ bzw. $C_N$) den Server implementieren, ein vorgelagerter Teilnehmer dazu geeignet ist, ein Photon zu emittieren, und ein nachgelagerter Teilnehmer ($C_N$) dazu geeignet ist, ein Photon zu empfangen und seinen Zustand zu messen.

8. Vorrichtung nach Anspruch 6, wobei der erste und zweite Teilnehmer einem Ring von Teilnehmern zugehörig sind, sodass ein gegebener Teilnehmer ($C_1$) den Server implementiert und dazu geeignet ist, ein Photon zu emittieren, ein Photon zu empfangen und seinen Zustand zu messen.

9. Vorrichtung nach einem der Ansprüche 6 bis 8, wobei der Server einen Laser, der dazu geeignet ist, Photonen zu erzeugen, und einen anfänglichen Modulator umfasst, der dazu geeignet ist, einen Freiheitsgrad eines von dem Laser erzeugten Photons zu modulieren.

10. Vorrichtung nach einem der Ansprüche 6 bis 8, wobei der erste und zweite Teilnehmer Modulatoren umfassen, die dazu geeignet sind, ein elektromagnetisches Feld zu modulieren, durch das die Photonen passieren, um einen Freiheitsgrad von ihnen zu ändern.

**Claims**

1. A method for calculating a logical AND between two chosen bits $x_i$, $x_j$ held by a first and a second participant, $C_i$, Cj respectively, connected to each other and to a server ($C_1$), by at least one quantum communication channel (Lq) and one conventional communication channel (Lc), comprising

    a first phase using said quantum communication channel and comprising
    a first step (S1) in which said first and second participants randomly determine, respectively, a first $\alpha$ and second $\beta$ correlation variable; they each determine a random bit, respectively p and q, and transmit to said server ($C_1$) a value dependent on the corresponding random bit p, q respectively;
    a second step (S2) in which said server ($C_1$) prepares a photon in a first state in an orthonormal basis, and transmits it to said first participant (Ci);
    a third step (S3) in which said first participant ($C_i$) applies a first transformation $V^\alpha U^p$ to said photon, and transmits it to said second participant ($C_j$), the logic gate V transforming a state into an orthogonal state and the logic gate U being a square root of the logic gate V;
    a fourth step (S4) in which said second participant ($C_j$) applies a second transformation $V^\beta U^q$ to said photon, and transmits it to said server;
    a fifth step (S5) in which the server $C_1$ performs a third transformation $(U^*)^{p+q}$, measures the state of said photon and determines a third correlation variable $\gamma$ based on said state, so as to form a correlation between said correlation variables; and
    a second phase comprising
    a sixth step (S6) in which said first and second participants exchange a value u1, u2 depending on the sum between the random bit, p, q, and the chosen bit, $x_i$, $x_j$, they hold, respectively;
    a seventh step (S7) in which said first participant calculates and provides a first value $a = \alpha + x_i \wedge u2$, said second participant calculates and provides a second value $b = \beta + x_j \wedge u1 + u1 \wedge u2$ and said server provides the third correlation variable $\gamma$,
    so that the result of the calculation of the logical "and" between said chosen bits can be obtained by summing said first and second values and said third correlation variable.

2. The method according to the preceding claim, wherein said first phase is carried out before said chosen bits are known to said participants.

3. The method according to either of the preceding claims, wherein, in said first step (S1), said first and second participants transmit respective values t1=p+r and t2=q+r, where r is a bit secretly shared by said first and second participants.

4. The method according to any one of the preceding claims, wherein said first state is the $|+\rangle$ state.

5. The method according to any one of the preceding claims, wherein said conventional communication channel (Lc) is a secure channel.

6. A device for calculating a logical AND between two chosen bits $x_i$, $x_j$ held by a first and a second participant ($C_i$, $C_j$ respectively), connected to each other and to a server ($C_1$), by at least one quantum communication channel (Lq) and one conventional communication channel (Lc), comprising means for implementing the method according to any one of the preceding claims.

7. The device according to the preceding claim, wherein said first and second participants belong to a chain of participants, wherein the two participants at the ends ($C_1$, $C_N$ respectively) implement said server, an upstream participant being able to emit a photon, and a downstream participant ($C_N$) being able to receive a photon and measure its state.

8. The device according to claim 6, wherein said first and second participants belong to a ring of participants, such that a given participant ($C_1$) implements said server and is able to emit a photon, receive a photon, and measure its state.

9. The device according to any one of claims 6 to 8, wherein said server comprises a laser adapted to generate photons and an initial modulator adapted to modulate a degree of freedom of a photon generated by said laser.

10. The device according to any one of claims 6 to 8, wherein said first and second participants comprise modulators capable of modulating an electromagnetic field through which the photons pass in order to change a degree of freedom thereof.

Fig. 1a

Fig. 1b

| Degré de liberté | (0) | (1) |
|---|---|---|
| Phase | Phase fixe $P_0$ | $P_0+$pi |
| Différence de phase | 0 | Pi |
| Localisation temporelle | Temps $t_0$ | $t_0+$delta |
| Polarisation | Horizontale | Verticale |
| Fréquence | $f_1$ | $f_2$ |

Fig. 2

```
┌─────────┐
│   S1    │
└─────────┘
     │
     ▼
┌─────────┐                              ┌─────────┐
│   S2    │                              │   S6    │
└─────────┘                              └─────────┘
     │                                        │
     ▼                                        ▼
┌─────────┐                              ┌─────────┐
│   S3    │                              │   S7    │
└─────────┘                              └─────────┘
     │
     ▼
┌─────────┐
│   S4    │
└─────────┘
     │
     ▼
┌─────────┐
│   S5    │
└─────────┘
```

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 108388946
- CN 108632261
- FR 1909839

**Littérature non-brevet citée dans la description**

- Mental Poker. **D'A. SHAMIR ; R. RIVEST ; L. ADLEMAN.** Technical Report LCS/TR-125. Massachusetts Institute of Technology, Avril 1979
- **R. SUDHAKAR et al.** *A Novel hybrid Quantum Protocol to enhance secured dual party Computation over Cloud Networks*
- **R. SHI et al.** *Quantum solution to a class of two-party private summation problems*
- Classical multiparty computation using quantum resources. **DE MARCO CLEMENTI ; ANNA PAPPA ; ANDREAS ECKSTEIN ; IAN WALMSLEY ; ELHAM KASHEFI et al.** Physical Review A. American Physical Society, 2017, vol. 96, 062317